# EUROPÄISCHE PATENTSCHRIFT

(11) **EP 1 456 610 B1**
(45) Veröffentlichungstag und Bekanntmachung des Hinweises auf die Patenterteilung: **10.08.2016**
(21) Anmeldenummer: 02791807.7
(22) Anmeldetag: 11.12.2002
(51) Int. Cl.: G01F 23/26, G01D 18/00, G01F 25/00

(54) **VERFAHREN ZUR KALIBRIERUNG EINES FELDGERÄTES**
METHOD FOR CALIBRATING A FIELD DEVICE
PROCEDE D'ETALONNAGE D'UN APPAREIL DE TERRAIN

(30) Priorität: 18.12.2001 DE 10162334
(43) Veröffentlichungstag der Anmeldung: 15.09.2004
(73) Patentinhaber: Endress + Hauser GmbH + Co. KG, 79689 Maulburg (DE)
(72) Erfinder: MÜLLER, Alexander, 79361 Sasbach-Jechtingen (DE)
(74) Vertreter: Andres, Angelika Maria
(86) Internationale Anmeldenummer: PCT/EP2002/014033
(87) Internationale Veröffentlichungsnummer: WO 2003/052358

(56) Entgegenhaltungen:
- EP-A- 0 423 622
- EP-A- 0 926 470
- WO-A-00/12973
- DE-A- 19 536 199
- US-A- 5 237 851
- US-A- 5 359 877
- US-A- 5 668 300
- US-B1- 6 249 753

## Beschreibung

Die Erfindung bezieht sich auf ein Verfahren zur Kalibrierung eines Feldgeräts.

Bei Feldgeräten mit einer Feldgeräteelektronik und konduktiven oder kapazitiven Sensoreinheiten der Anmelderin ist es bei extremen Feldbedingungen notwendig, mit einem Potentiometer eine Kalibrierung der Empfindlichkeit des Feldgerätes vorzunehmen, wobei insbesondere eine Schaltschwelle einer Auswerteelektronik mit dem Potentiometer eingestellt wird. Die Richtung in der die Schaltschwelle verändert wird hängt davon ab, ob das Feldgerät in einer Betriebsart "MIN" als Pumpenschutz, d. h. Warnung wenn eine vorgegebener Füllstand unterschritten wird oder in einer Betriebsart "MAX" als Überlaufschutz, d. h. Warnung wenn ein vorgegebener Füllstand überschritten, betrieben wird. Die Kalibrierung wird immer dann durchgeführt, wenn ein angezeigter Sensorzustand aufgrund der Feldbedingungen (Ansatz usw.) nicht mit dem aktuellen Sensorzustand übereinstimmt.

Praktisch bei allen bisher auf dem Markt befindlichen Sensoreinheiten zur Füllstandsbestimmung in Flüssigkeiten und Schüttgütern, die auf der Basis von Kapazitätsmessungen oder von Leitfähigkeitsmessungen arbeiten, werden sinusförmige elektrische Wechselspannungssignale als Ansteuersignale für die Sensoreinheiten verwendet. Dabei dienen die Wechselsignale direkt als Messsignale. Diese Wechselsignale werden normalerweise mittels eines analogen Oszillators erzeugt und zur weiteren Verarbeitung analog gefiltert, gleichgerichtet und bei Grenzstandschaltern mittels analoger Komparatoren mit vorgegeben Schwellwerten verglichen. Mikroprozessoren werden in der Regel nur dazu eingesetzt, die mittels Analogelektronik aufbereiteten Signale zu linearisieren, zu skalieren sowie mit Zeitverzögerungen, Schalthysteresen oder Invertierungen zu versehen.

In der DE 195 36 199 A1 wird ein Verfahren zur Einstellung des Schaltpunkts bei einem kapazitiven Füllstandsgrenzschalter beschrieben. Bei dem bekannten Verfahren wird die Kapazität der Sonde mit einem den Schaltpunkt bestimmenden Schwellenwert vergleichen, um festzustellen, ob die Sonde vom Füllgut bedeckt ist oder nicht. Die in dem entsprechenden Zustand der Sonde gemessene Kapazität der Sonde wird als erster Referenzwert gespeichert und ein vorläufiger zweiter Referenzwert wird aus dem ersten Referenzwert durch Addieren (Sonde ist unbedeckt) bzw. Subtrahieren (Sonde ist bedeckt) berechnet und gleichfalls gespeichert. Aus der Differenz der beiden gespeicherten Referenzwerte wird der Schwellenwert nach einer vorgegebenen Funktion so berechnet, dass er zwischen den beiden Referenzwerten liegt. Im weiteren Betrieb werden die Kapazitätsmesswerte fortlaufend mit dem gespeicherten zweiten Referenzwert vergleichen.
Ein Kapazitätswert wird immer dann als neuer zweiter Referenzwert gespeichert, wenn der Betrag der beiden Referenzwerte einen vorgegebenen Betrag über- oder unterschreitet. Nach jeder Speicherung eines neuen zweiten Referenzwertes erfolgt eine Berechnung des neuen Schwellenwert, usw.

Der Erfindung liegt die Aufgabe zugrunde, ein Feldgerät vorzuschlagen, das einfach kalibriert werden kann, insbesondere auch dann, wenn das Feldgerät mit einem hermetisch abgeschlossenen Gehäuse ausgeführt ist und ein Verfahren zur Kalibrierung des Feldgerätes anzugeben.

Diese Aufgabe wird erfindungsgemäß durch die Merkmale des Anspruchs 1. Die abhängigen Ansprüche betreffen vorteilhafte Aus- und Weiterbildungen der Erfindung.

Die Kalibrierung wird mit einem Mikroprozessor und einem digitalen Verstellelement durchgeführt und ist insbesondere für Feldgeräte von Vorteil, deren Gehäuse hermetisch abgeschlossen sind, so dass kein Zugang zu einem manuellen Verstellpotentiometer möglich ist. Besonders vorteilhaft läßt sich der Erfindunggedanke realisieren, wenn bereits ein Mikroprozessor Teil der Feldgeräteelektronik ist, da dieser zur Kalibrierung benutzt werden kann.

Das digitale Verstellelement wirkt durch entsprechende Signale auf die Auswerteeinheit und/oder auf eine Signalerzeugungsbaugruppe des Feldgerätes ein, wobei die Wirkung des digitalen Verstellelements darin besteht, einen Schwellwert in der Auswerteeinheit oder einen Verstärkungsfaktor in der Signalerzeugungsbaugruppe einzustellen.

Bei einer weiteren Ausführungsform der Erfindung umfasst die Auswerteeinheit einen Komparator, der als analoge Schaltung oder als programmierter Funktionsblock ausgeführt sein kann und abhängig von einem Vergleich des Messsignals mit einem Sollwert ein Zustandssignal erzeugt, wobei der Sollwert vom Mikroprozessor über das digitale Verstellelement erzeugt wird.

Erfindungsgemäß wird die Kalibrierung durch ein Schaltelement ausgelöst, welches kontaktlos von ausserhalb des Feldgerätegehäuses betätigt wird. Die Betätigung erfolgt bei dieser Weiterbildung beispielsweise durch Änderung eines Magnetfeldes. Das Schaltelement ist beispielsweise als Reed Relais oder als Hall Sensor ausgeführt und das zugehörige Betätigungselement Dauermagnet. Diese Ausführungsform hat den Vorteil, dass sie kostengünstig realisiert werden kann.

Zum Schutz vor versehentlicher Auslösung des Kalibriervorganges, ist ein Zeitfester vorgesehen, innerhalb dessen ein vorgegebener Betätigungsablauf, beispielsweise zweimaliges Betätigen oder Betätigen für eine bestimmte Zeitdauer, vorgenommen werden muß, um den Kalibriervorgang zu starten.

Bei eine anderen Weiterbildung der Erfindung ist die Schnittstelle zwischen dem Betätigungselement und dem Schaltelement als Sende-/Empfangseinheit für einen drahtlosen Datenaustausch von induktiven, optischen oder elektromagnetischen Signalen zwischen dem Betätigungselement und dem Schaltelement ausgeführt, wobei das Betätigungselement als Speicherkarte ausgeführt sein kann.

So kann die Schnittstelle zwischen Schaltelement und Betätigungselement beispielsweise als Transponderanordnung zur induktiven Datenübertragung mit einer Sendespule und einer Empfangsspule ausgeführt sein, wobei das Betätigungselement die Sendespule umfasst und das Schaltelement die Empfangsspule umfasst.

Zudem kann die Schnittstelle als Infrarotschnittstelle zur optischen Übertragung oder als Funkschnittstelle, beispielsweise nach dem Blue-Tooth-Protokoll, ausgeführt sein, wobei die Sendeeinheit Teil des Betätigungselements ist und die Empfangseinheit Teil des Schaltelements ist.

Wir das Schaltelement zur Auslösung des Kalibriervorganges über eine Luftschnittstelle betätigt ist es in vorteilhafterweise möglich durch unterschiedlich kodierte Signale verschiedene Kalibriervorgänge auszulösen, bzw. die Auslösung von einem bestimmten Code abhängig zu machen, so dass keine unbefugte Manipulation oder eine versehentliche Auslösung des Kalibriervorganges möglich ist.

Das erfindungsgemäße Verfahren zur Kalibrierung des Feldgerätes umfasst in einem ersten Verfahrensschritt die Ermittlung einer Betriebsart in der das Feldgerät betrieben wird. Bei einer besonders vorteilhaften Ausführung des Verfahrens ermittelt die Feldgeräteelektronik die Betriebsart durch eine Auswertung der Anschlußbelegung des Feldgerätes.

Der Betrieb des Feldgerätes ist in einer ersten Betriebsart "MIN" als Pumpenschutz, d. h. eine Warnung erfolgt, wenn ein vorgegebener Füllstand unterschritten wird, oder in einer Betriebsart "MAX" als Überlaufschutz, d. h. eine Warnung erfolgt, wenn ein vorgegebener Füllstand überschritten wird, möglich.

In einem zweiten Verfahrensschritt ermittelt die Feldgeräteelektronik einen Sollzustand des Sensors, wobei der Sollzustand mittels einer logischen Verknüpfung zwischen dem Signal, welches die Betriebsart des Feldgerätes repräsentiert und dem Signal, welches den Ausgangszustand des Zustandssignales repräsentiert und der Tatsache, dass ein Kalibriervorgang gestartet wurde ermittelt wird.

Bei der Ermittlung des Sollzustandes des Sensors wird vorausgesetzt, dass der aktuelle Zustand des Sensors nicht durch den Ausgangszustand des Zustandssignals repräsentiert wird, da ein Kalibriervorgang manuell von ausserhalb des Feldgerätes gestartet wurde, so dass der Ausgangszustand des Zustandssignals so verändert werden muss, dass sich der Sollzustand des Zustandssignals einstellt, der den aktuellen Zustand des Sensors repräsentiert.

Ein Kalibriervorgang wird immer dann ausgelöst, wenn ein angezeigter Sensorzustand, der dem Ausgangszustand eines Zustandssignals entspricht, aufgrund der Feldbedingungen (Ansatz usw.) nicht mit dem aktuellen Sensorzustand übereinstimmt. Zum Schutz vor versehentlichem Auslösen des Kalibriervorganges, muss bei einer Ausführungsform des Verfahrens innerhalb einer vorgegebenen Zeitspanne das Betätigungselement zweimal das Schaltelement betätigen um den Kalibriervorgang zu starten. Selbstverständlich sind auch andere Betätigungsabläufe zum Starten des Kalibriervorganges denkbar, beispielsweise eine Betätigung des Schaltelements durch das Betätigungselement für eine vorgegebene Zeitspanne.

Abhängig von der ermittelten Betriebsart und des ermittelten Sollzustandes des Zustandssignals wird in einem dritten Verfahrensschritt eine Empfindlichkeit des Feldgerätes solange verändert wird, bis ein Umschalten des Zustandssignals erkannt wird.

Die Empfindlichkeit des Feldgerätes wird beispielsweise dadurch erhöht, dass ein Schwellwert für den Komparator verkleinert wird, oder ein Verstärkungsfaktor bei der Erzeugung des Messsignals in der Signalerzeugungsbaugruppe erhöht wird. Analog wird die Empfindlichkeit des Feldgerätes dadurch verkleinert, dass der Schwellwert für den Komparator vergrößert wird oder der Verstärkungsfaktor des Messsignals verkleinert wird.

Die Erfindung wird anhand der nachfolgenden Zeichnungen näher erläutert. Es zeigt:
Fig. 1: Blockschaltbild eines ersten Ausführungsbeispiels eines Feldgerätes, bei dem das erfindungsgemäße Verfahren durchgeführt;
Fig. 2: Blockschaltbild eines zweiten Ausführungsbeispiels eines Feldgerätes, bei dem das erfindungsgemäße Verfahren durchgeführt wird;
Fig. 3: Flußdiagramm des erfindungsgemäßen Verfahrens.

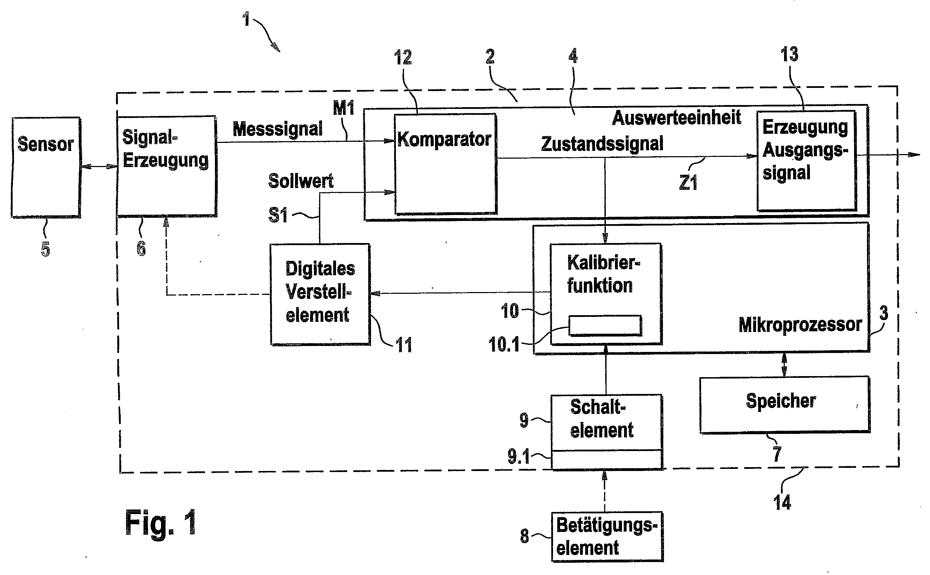

Wie aus Fig. 1 ersichtlich ist umfasst das Feldgerät 1 eine Feldgeräteelektronik 2 und Sensoreinheit 5 zur Ermittlung und/oder Überwachung eines Füllstandes eines Mediums in einem Behälter (nicht dargestellt), wobei die Sensoreinheit 5 beispielsweise als kapazitive oder als konduktive Sonde ausgeführt ist. Die Feldgeräteelektronik 2 umfasst einen Mikroprozessor 3, eine Auswerteeinheit 4, Signalerzeugungseinheit 6, eine Speichereinheit 7, ein digitales Verstellelement 11 und ein Schaltelement 9, wobei ein Betätigungselement 8 das Schaltelement 9 von ausserhalb des Gehäuses 14 der Feldgeräteelektronik kontaktlos betätigt. Bei dem dargestellten Ausführungsbeispiel ist das Gehäuse 14 hermetisch abgeschlossen und die kontaktlose Betätigung erfolgt durch Änderung eines Magnetfeldes, wobei das Schaltelement 9 beispielsweise als Reed Relais oder als Hall Sensor ausgeführt ist, und das zugehörige Betätigungselement 8 eine Dauermagnet ist. Eine vorhandene Schnittstelle 9.1 ist in dem dargestellten Ausführungsbeispiel dadurch realisiert, dass ein bestimmter Abstand des Schaltelements 8 zum Gehäuse 14 nicht überschritten wird. Die Schnittstelle 9.1 kann aber auch aufwendiger realisiert sein, beispielsweise als Sende-/Empfangseinheit für einen drahtlosen Datenaustausch von induktiven, optischen oder elektromagnetischen Signalen zwischen dem Betätigungselement 9 und dem Schaltelement 8. Die dargestellte Auswerteelektronik 4 umfasst einen Komparator 12 und eine Einheit zur Erzeugung eines Ausgangssignals 13, wobei der Komparator 12 als analoge Schaltung ausgeführt ist und abhängig von einem Vergleich eines von der Signalerzeugungseinheit 6 erzeugten Messsignals M1 mit einem vom digitalen Verstellelement 11 erzeugten Sollwert S1 ein Zustandssignal Z1 erzeugt, wobei der Sollwert S1 vom Mikroprozessor 3 über das digitale Verstellelement 11 erzeugt wird. Das Zustandssignal Z1 kann zwei Zustände annehmen und repräsentiert entwender einen Zustand "Frei", d. h. der Sensor ist nicht von einem Medium bedeckt, oder einen Zustand "bedeckt", d.h. der Sensor ist von einem Medium bedeckt.

Abhängig vom aktuellen Zustand des Zustandssignals Z1 erzeugt die Einheit zur Erzeugung eines Ausgangssignals 13 ein entsprechendes Ausgangssignal, wobei die Einheit zur Erzeugung eines Ausgangssignals 13 eine notwendige Anpassung des Ausgangssignals für die Weitergabe an eine übergeordnete Einheit durchführt. Das erzeugte Ausgangssignal ist von der weiteren Verwendung des Ausgangssignals bzw. vom verwendeten Übertragungsprotokoll abhängig. So kann beispielsweise ein 4-20 mA-Signal, ein 0-10V-Signal, ein PFM-Signal (Pulsfrequenzmodulations-Signal), ein binäres Schaltsignal, oder ein digitaler Code... usw. erzeugt werden. Es ist aber auch vorstellbar, mehrere Ausgangssignale (4-20 mA, 0-10V, PFM Signal, binäres Schaltsignal... usw.) für verschiedene Übertragungsprotokolle bzw. Verwendungszwecke erzeugt und ausgegeben werden.

Das digitale Verstellelement 11 ist beispielsweise als Digital/Analogwandler ausgeführt, der den digitalen Sollwert vom Mikroprozessor 3 in einen analogen Sollwert S1 umwandelt. Zur Kalibrierung des Feldgerätes 1 führt der Mikroprozessor 3 eine Kalibrierfunktion 10 aus, wobei die Kalibrierfunktion 10 als auf dem Mikroprozessor 3 ablauffähiges Programm in der Speichereinheit 7 gespeichert ist. Als Teil der Kalibrierfunktion 10 wird bei der Ausführung des Kalibriervorganges der Sollwert S1 über das digitale Verstellelement verändert und in einem Sollwertspeicher 10.1 gespeichert. Es ist aber auch möglich einen Verstärkungsfaktor (gestrichelt eingezeichnet) in der Signalerzeugungseinheit 6 zu verändern. Die Änderung des Sollwertes ist vom Zustand des Zustandssignals und von der Betriebsart, in der das Feldgerät 1 betrieben wird, abhängig. Die Betriebsart des Feldgerätes ist abhängig von der Beschaltung der Sensoreinheit 5 mit der Feldgeräteelektronik 2, d. h. wie die Sensoreinheit 5 mit der Signalerzeugungseinheit 6 verbunden ist. Das Feldgerät kann in einer Betriebsart "MIN" als Pumpenschutz, d. h. Warnung wenn eine vorgegebener Füllstand unterschritten wird oder in einer Betriebsart "MAX" als Überlaufschutz, d. h. Warnung wenn ein vorgegebener Füllstand überschritten, betrieben werden.

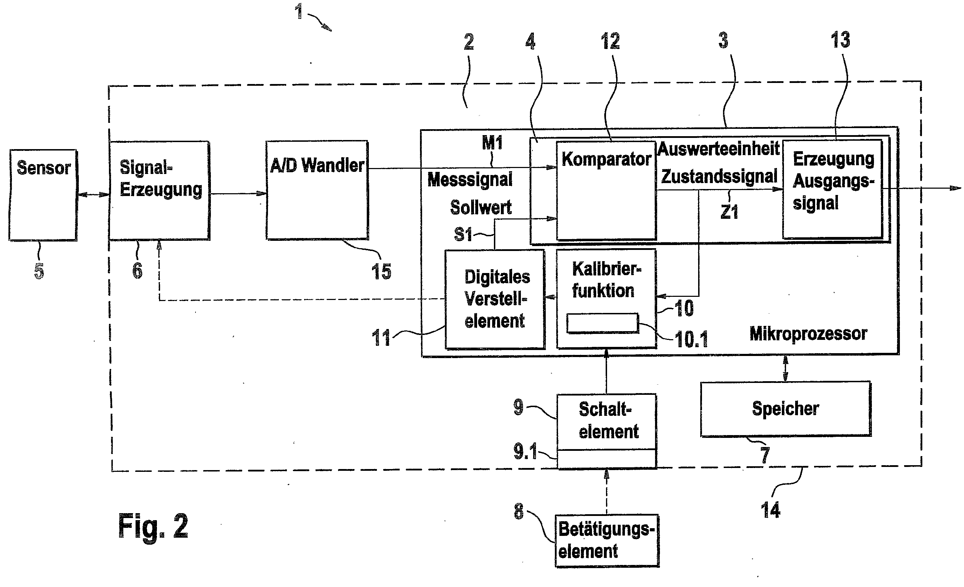

Fig 2. zeigt als zweites Ausführungsbeispiel eine Abwandlung des Ausführungsbeispiels nach Fig. 1. Im Unterschied zum ersten Ausführungsbeispiel sind die Auswerteeinheit 4 mit Komparator 12 und Einheit zur Erzeugung eines Ausgangssignals 13 und das digitale Verstellelement 11 zusätzlich als vom Mikroprozessor ausführbare Funktionen realisiert, wobei die zugehörigen ablauffähigen Programme ebenfalls in der Speichereinheit 7 gespeichert sind. Als neue Einheit ist ein Analog/Digitalwandler 15 vorhanden, der das von der Signalerzeugung 6 erzeugte analoge Messsignal zur Verarbeitung im Mikroprozessor in ein digitales Messsignal M1 umwandelt. Zur Funkionsweise der einzelnen Einheiten wird auf die Ausführungen zu Fig. 1 verwiesen.

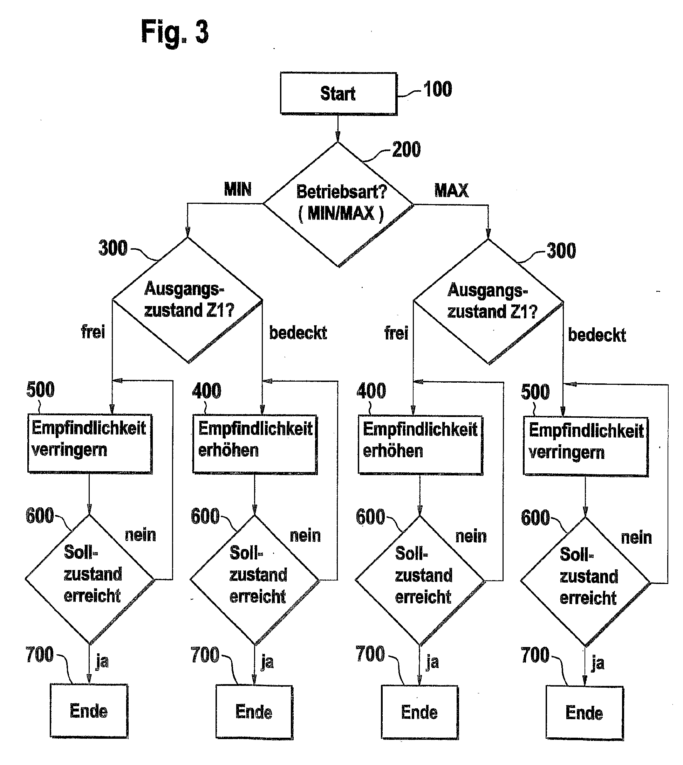

Wie aus Fig. 3 ersichtlich ist, wird nach einem manuell ausgelösten Start 100 des Kalibriervorganges 100 die Betriebsart des Feldgerätes festgestellt 200. Abhängig von der festgestellten Betriebsart (MIN oder MAX) verzweigt das Verfahren, wobei in beiden Verzweigungen anschliessend der Ausgangszustand des Zustandssignals Z1 ermittelt wird 300. Abhängig vom ermittelten Ausgangszustand des Zustandssignals Z1 wird dann in einer Schleife die Empfindlichkeit des Feldgerätes erhöht 400 oder verringert 500 und der neue Wert abgespeichert. Wird in einer Abfrage 600 erkannt, dass der Sollzustand des Zustandssignales Z1 erreicht ist, dann wird der Kalibriervorgang beendet 700. Ist der Sollzustand noch nicht erreicht, so wird erneut die Empfindlichkeit verändert 400, 500 bis der Sollzustand des Zustandssignals erreicht ist. Zur Änderung der Empfindlichkeit kann der Sollwert S1 des Komparators und/oder der Verstärkungsfaktor für das Messsignal M1 verändert werden, wobei zur Erhöhung der Empfindlichkeit der Sollwert S1 verkleinert bzw. der Verstärkungsfaktor vergrößert und zur Verringerung der Empfindlichkeit der Sollwert S1 vergrößert bzw. der Verstärkungsfaktor verkleinert wird.

Es ergeben sich folgende mögliche Verfahrensabläufe:
In der Betriebsart ,MAX` ist der Ausgangszustand des Zustandssignals ;frei', der aktuelle Zustand des Sensors ist aber ,bedeckt`, d. h. der Sollzustand des Zustandssignals ist ,bedeckt`. Da ein falscher Zustand angezeigt wird, muss dieser durch den Kalibriervorgang verändert werden. Durch manuelle Auslösung des Kalibriervorganges, wird nun die Empfindlichkeit solange verringert, bis der Komparator umschaltet und der Sollzustand des Zustandssignals erreicht ist.
In der Betriebsart ,MAX` ist der Ausgangszustand des Zustandssignals ; bedeckt', der aktuelle Zustand des Sensors ist aber ,frei', d. h. der Sollzustand des Zustandssignals ist ,frei`. Da ein falscher Zustand angezeigt wird, muss dieser durch den Kalibriervorgang verändert werden. Durch manuelle Auslösung des Kalibriervorganges, wird nun die Empfindlichkeit solange erhöht, bis der Komparator umschaltet und der Sollzustand des Zustandssignals erreicht ist.
In der Betriebsart ,MIN` ist der Ausgangszustand des Zustandssignals ;frei', der aktuelle Zustand des Sensors ist aber ,bedeckt`, d. h. der Sollzustand des Zustandssignals ist ,bedeckt`. Da ein falscher Zustand angezeigt wird, muss dieser durch den Kalibriervorgang verändert werden. Durch manuelle Auslösung des Kalibriervorganges, wird nun die Empfindlichkeit solange verringert, bis der Komparator umschaltet und der Sollzustand des Zustandssignals erreicht ist.
In der Betriebsart ,MIN` ist der Ausgangszustand des Zustandssignals ; bedeckt', der aktuelle Zustand des Sensors ist aber ,frei`, d. h. der Sollzustand des Zustandssignals ist ,frei`. Da ein falscher Zustand angezeigt wird, muss dieser durch den Kalibriervorgang verändert werden. Durch manuelle Auslösung des Kalibriervorganges, wird nun die Empfindlichkeit solange erhöht, bis der Komparator umschaltet und der Sollzustand des Zustandssignals erreicht ist.

## Patentansprüche

1. Verfahren zur Kalibrierung eines Feldgeräts (1) zur Bestimmung eines vorgegebenen Füllstands eines Mediums in einem Behälter mit einer Sensoreinheit (5) und einer in einem Gehäuse (14) angeordneten Feldgeräteelektronik (2), die Messsignale (M1) der Sensoreinheit (5) empfängt, wobei die Feldgeräteelektronik (2) eine Messsignalerzeugung (6), eine Auswerteeinheit (4) zur Auswertung von Messsignalen (M1) und Mittel zur Kalibrierung des Feldgeräts (1) umfasst, wobei die Mittel zur Kalibrierung ein digitales Verstellelement (11) und einen Mikroprozessor (3) umfassen, wobei zur Kalibrierung des Feldgeräts (1) das digitale Verstellelement (11) vom Mikroprozessor (3) angesteuert wird, wobei das Feldgerät (1) in zwei Betriebsarten (Min, Max) betreibbar ist, wobei in der ersten Betriebsart (Min) eine Warnung erfolgt, wenn der vorgegebene Füllstand unterschritten wird und wobei in der zweiten Betriebsart (Max) eine Warnung erfolgt, wenn der vorgegebene Füllstand überschritten wird, wobei das Verfahren folgende Verfahrensschritte aufweist:
ein Kalibriervorgang wird durch ein in dem Gehäuse (14) angeordnetes Schaltelement (9) gestartet, das kontaktlos von außerhalb des Gehäuses 14 betätigt wird,
die Betriebsart (Min, Max) des Feldgeräts (1) wird von der Feldgeräteelektronik (2) festgestellt,
ein Sollzustand eines Zustandssignals (Z1) des Feldgeräts (1) wird von der Feldgeräteelektronik (2) in Abhängigkeit von der festgestellten Betriebsart (Min, Max) ermittelt,
weicht der Ausgangszustand des Zustandssignals (Z1) von dem Sollzustand des Zustandssignals (Z1) ab, so wird in Abhängigkeit von der festgestellten Betriebsart (Min, Max) und dem ermittelten Sollzustand die Empfindlichkeit des Feldgerätes (1) sukzessive verändert, bis ein Umschalten des Zustandssignals (Z1) erkannt wird und der Ausgangszustand des Zustandssignals (Z1) dem Sollzustand des Zustandssignals (Z1) entspricht.

2. Verfahren nach Anspruch 1, wobei die Betriebsart des Feldgeräts (1) durch Auswertung der Anschlussbelegung des Feldgeräts (1) ermittelt wird.

3. Verfahren nach Anspruch 1,
wobei über einen Komparator (12), der von der Auswerteeinheit (4) umfasst wird, in Abhängigkeit von einem Vergleich des Messsignals (M1) mit einem Sollwert (S1) das Zustandssignal (Z1) erzeugt wird, wobei der Sollwert vom Mikroprozessor über das digitale Verstellelement (11) erzeugt wird, wobei zur Änderung der Empfindlichkeit der Sollwert (S1) des Komparators (12) und/oder ein Verstärkungsfaktor für das Messsignal (M1) verändert wird, wobei zur Erhöhung der Empfindlichkeit der Sollwert (S1) des Komparators (12) verkleinert bzw. der Verstärkungsfaktor vergrößert wird und wobei zur Verringerung der Empfindlichkeit der Sollwert (S1) des Komparators (12) vergrößert bzw. der Verstärkungsfaktor verkleinert wird.

4. Verfahren nach Anspruch 1,
wobei bei der Kalibrierung des Feldgerätes (1) das digitale Verstellelement (11) durch entsprechende Signale auf die Auswerteeinheit (4) und/oder auf die Messsignalerzeugung (6) einwirkt.

5. Verfahren nach Anspruch 1,
wobei der Kalibriervorgang über ein Reed Relais gestartet wird, das von außerhalb des Gehäuses (14) durch einen Magneten als Betätigungselement (9) betätigt wird.

6. Verfahren nach Anspruch 1,
wobei der Kalibriervorgang über einen Hall Sensor als Schaltelement (9) gestartet wird, der von außerhalb des Gehäuses (14) durch einen Magneten als Betätigungselement (8) betätigt wird.

7. Verfahren nach Anspruch 1,
wobei als Schnittstelle (9.1) zwischen Betätigungselement (8) und Schaltelement (9) eine Sende-/Empfangseinheit für einen drahtlosen Datenaustausch verwendet wird.

8. Verfahren nach Anspruch 7,
wobei als Schnittstelle (9.1) zwischen Schaltelement (9) und Betätigungselement (8) eine Transponderanordnung zur induktiven Datenübertragung mit einer Sendespule und einer Empfangsspule verwendet wird, wobei das Betätigungselement (8) die Sendespule umfasst und das Schaltelement (9) die Empfangsspule umfasst.

9. Verfahren nach Anspruch 7,
wobei als Schnittstelle (9.1) eine Infrarotschnittstelle oder eine Funkschnittstelle verwendet wird, wobei die Sendeeinheit Teil des Betätigungselements (9) ist und die Empfangseinheit Teil des Schaltelements (8) ist.

10. Verfahren nach einem der Ansprüche 7-9,
wobei als Betätigungselement (8) eine Speicherkarte verwendet wird.

## Claims

1. Procedure to calibrate a field device (1) for determining a pre-specified level of a medium in a vessel with a sensor unit (5) and field device electronics (2) arranged in
a housing (14), said field device electronics (2) receiving measuring signals (M1) from the sensor unit (5), wherein the field device electronics (2) comprise measuring signal generation (6), an evaluation unit (4) to evaluate measuring signals (M1) and
means to calibrate the field device (1), wherein the means to calibrate comprise a digital adjusting element (11) and a microprocessor (3), wherein the digital adjusting element (11) is controlled by the microprocessor (3) to calibrate the field device (1),
wherein the field device (1) can be operated in two operating modes (min, max), wherein a warning is issued in the first operating mode (min.) if the pre-specified level is undershot and wherein a warning is issued in the second operating mode (max.) if the pre-specified level is exceeded, wherein the procedure comprises the following
steps:
a calibration process is started by a switching element (9) which is arranged in the housing (14) and is activated in a contactless manner from outside the housing (14), the operating mode (min, max) of the field device (1) is determined by the field device
electronics (2),
a target state of a status signal (Z1) of the field device (1) is determined by the field
device electronics (2) depending on the determined operating mode (min, max),
if the initial state of the status signal (Z1) deviates from the target state of the status signal (Z1), the sensitivity of the field device (1) is gradually altered, depending on the operating mode determined (min, max) and the target state determined, until a switch
in the status signal (Z1) is detected and the initial state of the status signal (Z1)
corresponds to the target state of the status signal (Z1).

2. Procedure as claimed in Claim 1, wherein the operating mode of the field device (1) is determined by evaluating the terminal assignment of the field device (1).

3. Procedure as claimed in Claim 1,
wherein the status signal (Z1) is generated via a comparator (12), which is contained in the evaluation unit (4), depending on a comparison of the measuring signal (M1) with a target value (S1), wherein said target value (S1) is generated by the microprocessor via the digital adjusting element (11),
wherein the target value (S1) of the comparator (12) and/or an amplification factor for the measuring signal (M1) are modified to change the sensitivity,
wherein the target value (S1) of the comparator (12) is reduced and/or an amplification factor is increased to increase the sensitivity, and wherein the target value (S1) of the comparator (12) is increased and/or an amplification factor is reduced to decrease the sensitivity.

4. Procedure as claimed in Claim 1,
wherein, during the calibration of the field device (1), the digital adjusting element (11) acts on the evaluation unit (4) and/or on measuring signal generation (6) via appropriate signals.

5. Procedure as claimed in Claim 1,
wherein the calibration process is started via a reed relay which is controlled from outside the housing (14) by a magnet as an actuating element (9).

6. Procedure as claimed in Claim 1,
wherein the calibration process is started via a Hall sensor as a switching element (9) which is controlled from outside the housing (14) by a magnet as an actuating element (8).

7. Procedure as claimed in Claim 1,
wherein a transmission/receiver unit for wireless data exchange is used as the interface (9.1) between the actuating element (8) and the switch element (9).

8. Procedure as claimed in Claim 7,
wherein a transponder arrangement for inductive data transmission with a transmission coil and a receiver coil is used as the interface (9.1) between the switching element (9) and the actuating element (8), wherein the actuating element (8) comprises the transmission coil and the switching element (9) comprises the receiver coil.

9. Procedure as claimed in Claim 7,
wherein an infrared interface or a radio interface is used as the interface (9.1), wherein the transmission unit is part of the actuating element (8) and the receiver unit is part of the switching element (9).

10. Procedure as claimed in one of the Claims 7-9,
wherein a memory card is used as the actuating element (8).

## Revendications

1. Procédé destiné à l'étalonnage d'un appareil de terrain (1) utilisé pour la détermination d'un niveau prédéfini d'un produit dans un réservoir avec une unité de capteur (5) et une électronique d'appareil de terrain (2) disposée dans un boîtier (14), qui reçoit les signaux de mesure (M1) de l'unité de capteur (5), pour lequel l'électronique d'appareil de terrain (2) comprend un dispositif de génération de signaux de mesure (6), une unité d'exploitation (4) destinée à l'exploitation des signaux de mesure (M1) et des moyens d'étalonnage de l'appareil de terrain (1), l'élément de réglage numérique (11) étant commandé par le microprocesseur (3) en vue de l'étalonnage de l'appareil de terrain (1), pour lequel l'appareil de terrain (1) peut être utilisé dans deux modes de fonctionnement (Min, Max), un avertissement intervenant dans le premier mode de fonctionnement (Min) lorsque le niveau prédéfini est dépassé par défaut et un avertissement intervenant dans le deuxième mode de fonctionnement (Max) lorsque le niveau prédéfini est dépassé par excès, le procédé comprenant les étapes de procédé suivantes :
une procédure d'étalonnage est démarrée par un élément de commande (9) disposé dans le boîtier (14), lequel élément est actionné sans contact depuis l'extérieur du boîtier (14),
le mode de fonctionnement (Min, Max) de l'appareil de terrain (1) est déterminé par l'électronique d'appareil de terrain (2),
un état de consigne d'un signal d'état (Z1) de l'appareil de terrain (1) est déterminé par l'électronique d'appareil de terrain (2) en fonction du mode de fonctionnement (Min, Max) déterminé.
si l'état de sortie du signal d'état (Z1) diffère de l'état de consigne du signal d'état (Z1), la sensibilité de l'appareil de terrain (1) est modifiée successivement en fonction du mode de fonctionnement (Min, Max) déterminé et de l'état de consigne déterminé, jusqu'à ce qu'une commutation du signal d'état (Z1) soit reconnue et jusqu'à ce que l'état de sortie du signal d'état (Z1) corresponde à l'état de consigne du signal d'état (Z1).

2. Procédé selon la revendication 1, pour lequel le mode de fonctionnement de l'appareil de terrain (1) est déterminé par l'évaluation de l'affectation des broches de l'appareil de terrain (1).

3. Procédé selon la revendication 1,
pour lequel est généré le signal d'état (Z1) par l'intermédiaire d'un comparateur (12), lequel est compris dans l'unité d'exploitation (4), en fonction d'une comparaison du signal de mesure (M1) avec une valeur de consigne (S1), pour lequel la valeur de consigne est générée par le microprocesseur par l'intermédiaire de l'élément de réglage numérique (11),
pour lequel la valeur de consigne (S1) du comparateur (12) et/ou un facteur d'amplification pour le signal de mesure (M1) sont modifiés pour la modification de la sensibilité,
pour lequel la valeur de consigne (S1) du comparateur (12) est diminuée ou le facteur d'amplification est augmenté pour l'augmentation de la sensibilité et pour lequel la valeur de consigne (S1) du comparateur (12) est augmentée ou le facteur d'amplification est diminué pour la diminution de la sensibilité.

4. Procédé selon la revendication 1,
pour lequel, lors de l'étalonnage de l'appareil de terrain (1), l'élément de réglage numérique (11) agit au moyen de signaux appropriés sur l'unité d'exploitation (4) et/ou sur la génération des signaux de mesure (6).

5. Procédé selon la revendication 1,
pour lequel le processus d'étalonnage est démarré par l'intermédiaire d'un relais à lames souples, qui est actionné depuis l'extérieur du boîtier (14) par un aimant en tant qu'élément d'actionnement (8).

6. Procédé selon la revendication 1,
pour lequel le processus d'étalonnage est démarré en tant qu'élément de commutation (9) par l'intermédiaire d'un capteur à effet Hall, qui est actionné depuis l'extérieur du boîtier (14) par un aimant en tant qu'élément d'actionnement (8).

7. Procédé selon la revendication 1,
pour lequel une unité d'émission / de réception est utilisée pour un échange de données sans fil en tant qu'interface (9.1) entre l'élément d'actionnement (8) et l'élément de commutation (9).

8. Procédé selon la revendication 7,
pour lequel un circuit transpondeur destiné à la transmission de données inductive à l'aide d'une bobine émettrice et d'une bobine réceptrice est utilisé en tant qu'interface (9.1) entre l'élément de commutation (9) et l'élément d'actionnement (8), l'élément d'actionnement (8) comprenant la bobine émettrice et l'élément de commutation (9) la bobine réceptrice.

9. Procédé selon la revendication 7,
pour lequel est utilisée, en tant qu'interface (9.1), une interface infrarouge ou une interface radio, l'unité d'émission faisant partie intégrante de l'élément d'actionnement (8) et l'unité de réception faisant partie intégrante de l'élément de commutation (9).

10. Procédé selon l'une des revendications 7 à 9,
pour lequel une carte mémoire est utilisée en tant qu'élément d'actionnement (8).
